# EUROPÄISCHE PATENTSCHRIFT

(11) **EP 1 227 251 B1**
(45) Veröffentlichungstag und Bekanntmachung des Hinweises auf die Patenterteilung: **12.05.2010**
(21) Anmeldenummer: 01130809.5
(22) Anmeldetag: 24.12.2001
(51) Int. Cl.: F16B 7/18

(54) **Profil mit einer hinterschnittenen Nut**
Profile with undercut groove
Profilé à contre-dépouille

(30) Priorität: 25.01.2001 DE 10103841
(43) Veröffentlichungstag der Anmeldung: 31.07.2002
(73) Patentinhaber: Junker & Partner GmbH, 66636 Tholey (DE)
(72) Erfinder: Junker, Franz-Rudolf, 66636 Tholey-Sotzweiler (DE)
(74) Vertreter: Bernhardt, Reinold

(56) Entgegenhaltungen:
- EP-A- 0 767 313
- DE-A- 4 011 252
- DE-U- 20 012 600
- DE-U- 29 818 837
- DE-U- 29 908 743

## Beschreibung

Die Erfindung betrifft ein Profil mit hinterschnittenen Nuten für die Aufnahme in den Nuten verklemmbarer Nutensteine, wobei im Nutenboden jeweils eine Vertiefung gebildet und das Profil ein Hohlprofil ist, und wobei in den Profilhohlraum Vorsprünge ragen, welche in Bezug auf die Festigkeit des Profils die Vertiefung der Nutenböden ganz oder teilweise ausgleichende Materialverstärkungen bilden, und das Profil im Umriss eine quadratische Querschnittsfläche aufweist.

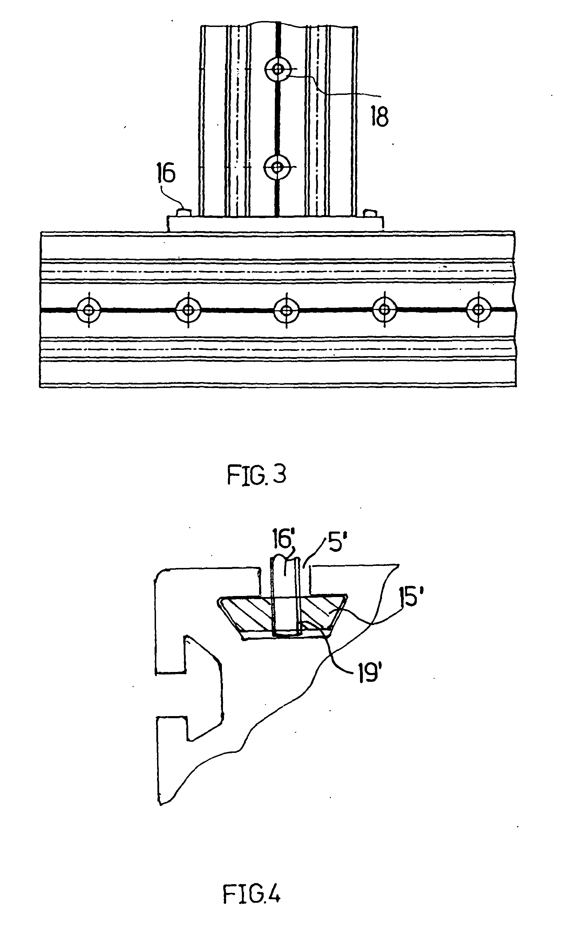

Es ist bekannt, Trägerprofile, z.B. das in Fig. 4 ausschnittsweise gezeigte Profil, mit hinterschnittenen Nuten 5' zu versehen, in welche ein Nutenstein 15' einsetzbar ist. Zur Verbindung eines weiteren Konstruktionselements mit dem Trägerprofil wird in eine Gewindebohrung 19' des Nutensteins eine Schraube 16' eingedreht, die durch eine Bohrung in dem Konstruktionselement geführt ist und deren Kopf dieses Element hintergreift. Zur Befestigung am Trägerprofil wird die Schraube in der Gewindebohrung des Nutensteins gedreht, bis der Nutenstein durch die Schraube gegen die Hinterschneidung und das Element gegen das Profil gezogen sind. Damit ist zwischen dem Nutenstein, dem Trägerprofil und dem weiteren Konstruktionselement eine Klemmverbindung hergestellt, welche eine gegenseitige Verschiebung der genannten Teile entlang der Nut verhindert. In axialer Richtung der Schraube werden die Teile durch die Schraubverbindung und den Formschluß des Nutensteins in der Nut zusammengehalten.Die Vertiefung im Nutenboden des eingangs erwähnten Profils bietet Freiraum für das aus dem Nutenstein in Richtung Nutenboden hervortretende Schraubenende, das infolge Längentoleranzen der Schraube unterschiedlich weit aus dem Nutenstein vorstehen kann. Ein Anschlag des Schraubenendes gegen den Nutenboden, der die Schraube blockiert und verhindert, dass der Nutenstein fest gegen die Hinterschneidung der Nut gezogen werden kann, wird so vermieden.

Die DE 299 08 743 U1 beschreibt ein Profil mit einer hinterschnittenen Längsnut und einer Rille im Nutenboden. In die Längsnut lässt sich ein Nutenstein mit einem in der Rille sitzenden Halteelement einsetzen, durch das der Nutenstein unter Selbsthemmung am Nutgrund abgestützt und gegen Verschieben gesichert wird.

Aus der DE 298 18 837 U1 geht ein Hohlprofil der eingangs erwähnten Art mit hinterschnittenen Längsnuten an vier Seiten hervor, in dessen im Querschnitt kreisförmigen Hohlraum über den Umfang der Hohlraumwand gleichmäßig verteilte Vorsprünge hineinragen. Die Vorsprünge versteifen die Wand des Hohlraums, welche im übrigen ein gleichmäßige Dicke aufweist.

Die DE 298 18 837 U1 offenbart ein Profil mit den Merkmalen des Oberbegriffs des Anspruchs 1.

Der Erfindung liegt die Aufgabe zugrunde, ein neues Profil der eingangs erwähnten Art zu schaffen, dass bei verbesserten Festigkeitseigenschaften erweiterte Möglichkeiten für die Verbindung des Profils mit Konstruktionselementen bietet.

Dass diese Aufgabe lösende Profil nach der Erfindung ist dadurch gekennzeichnet, dass, im Querschnitt gesehen, auf jeder Quadratseite zwei Nuten mit einer Vertiefung im Nutenboden gebildet sind, und dass die Querschnittsflächen der Nuten symmetrisch zu den Diagonalen der quadratischen Profilquerschnittsfläche angeordnet sind und diese Diagonalen jeweils eine Mittelachse für die Vorsprünge bilden.

Vorteilhaft sind je Profilseite zwei Aufnahmenuten für Nutensteine vorgesehen und trotz zweier Aufnahmenuten lässt sich durch die erfindungsgemäße Querschnittsform des Profils eine hohe Festigkeit erreichen.

Eine die Vertiefung bildende Rille kann z.B. eine halbkreisförmige Querschnittsfläche aufweisen, die sich leicht herstellen lässt und nur eine geringe Materialentnahme erfordert.

Die Erfindung wird nachfolgend anhand eines Ausführungsbeispiels und der beiliegenden, sich auf dieses Ausführungsbeispiel beziehenden Zeichnungen näher erläutert werden: Es zeigen:
- Fig. 1: Profile nach der Erfindung, die über eine Verbindungsplatte und Nutensteine miteinander verbunden sind,
- Fig. 2: ein Querschnittsdetail eines in Fig. 1 im Querschnitt gezeigten Profils,
- Fig. 3: die miteinander verbundenen Profile von Fig. 1 in einer zu der Ansicht von Fig. 1 um 90° gedrehten Ansicht, und
- Fig. 4: ein herkömmliches Profil mit einer hinterschnittenen Nut.

In den Figuren ist mit dem Bezugszeichen 1 ein Hohlprofil bezeichnet, welches an einer Längsseite über eine Verbindungsplatte 2 mit einem ebensolchen Profil 3 verbunden ist.

Die Profile 1 und 3 weisen im Umriß eine quadratische Querschnittsfläche und als Hohlprofile einen Profilhohlraum 4 auf.

An den Profilen sind insgesamt acht in Längsrichtung verlaufende Nuten 5 gebildet, die, im Profilquerschnitt gesehen, symmetrisch sowohl zu den diagonalen der Querschnittsfläche als auch zu deren die Rechteckseiten senkrecht schneidenden Mittellinien angeordnet sind.

An den Profilecken benachbart angeordnete Nuten 5 sind durch einen Steg 6 voneinander getrennt. Am freien, sich aufweitenden Endteil der Stege 6 ist jeweils eine sich axial in Profillängsrichtung erstreckende Gewindebohrung gebildet. In entsprechende Gewindebohrungen des Profils 3 greifen nicht gezeigte Schrauben ein, über welche die Verbindungsplatte 2 stirnseitig an dem Profil 3 befestigt ist.

An den Öffnungsrändern der Nuten 5 sind Abstufungen 8 vorgesehen, durch welche jeweils eine Führung für von der Verbindungsplatte 2 vorstehende Führungsschienen 9 gebildet ist.

Jede der hinterschnittenen Nuten 5 weist einen Nutenboden 10 mit einer in Nutenlängsrichtung verlaufenden Rille 11 auf. Die in den Eckbereichen der Querschnittsfläche angeordneten Paare von Nuten 5 sind von dem Profilhohlraum 4 durch einen sich zu dem Steg 6 etwa senkrecht erstreckenden Steg 12 getrennt. In den Stegen 12 sind jeweils auf der Diagonalen der Querschnittsfläche angeordnete Passbohrungen 13 für den Eingriff von Passstiften gebildet.

Von jedem der Stege 12 steht ein auf einer Diagonalen angeordneter Vorsprung 14 in den Profilhohlraum 4 vor, wobei der Profilhohlraum 4 abgesehen von den Vorsprüngen 14 einen Querschnitt in Form einer Kreisfläche aufweist.

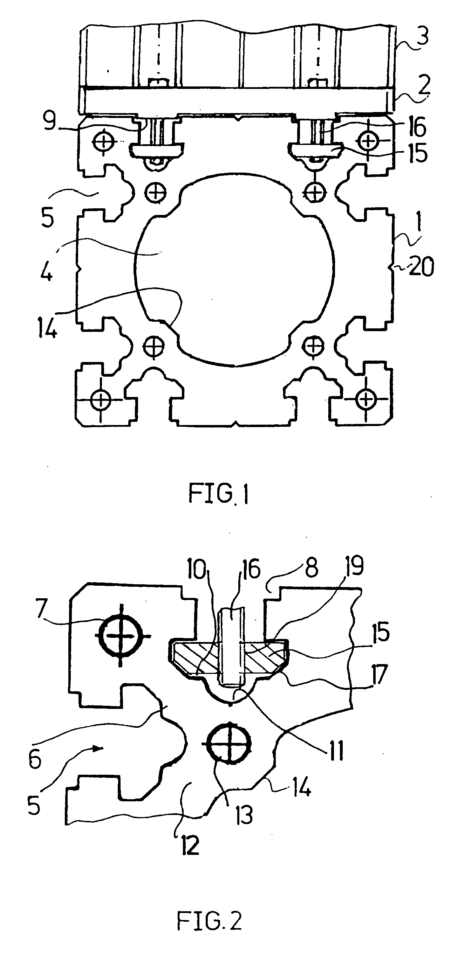

Zur Herstellung der in den Fig. 1 und 3 gezeigten Verbindung zwischen den Profilen 1 und 3 werden in die zwei auf einer Profilseite gebildete Nuten 5 Nutensteine 15 mit einer Gewindebohrung 19 eingesetzt, in die jeweils eine Schraube 16 eingreift, die durch eine Durchgangsbohrung in der Verbindungsplatte 2 geführt ist. Jeweils zwei solcher Durchgangsbohrungen für Schrauben 22 sind in einem seitlich über die Stirnfläche des Profils 3 vorstehenden Teil der Verbindungsplatte 2 gebildet, wie aus Fig. 3 ersichtlich ist.

Entlang den Profilen 2 und 3 sind an allen vier Profilseiten in der Mitte Bohrungen als Sitze für ein Passelement gebildet, wobei diese Sitze zueinander in einem Rasterabstand angeordnet sind. In den Sitzen verankerte Passzapfen können in entsprechende Passausnehmungen in der Verbindungsplatte 2 eingreifen.

Beim Verbinden der Profile 1 und 3 über die Verbindungsplatte 2 wird das Profil 3 mit der Verbindungsplatte 2 auf das Profil 1 aufgesetzt, wobei die Führungsschienen 9 der Verbindungsplatte 2 in die Führungen eingreifen, welche durch die Abstufungen 8 an den Öffnungsrändern der Nuten 5 gebildet sind. Von der Stirnseite des Profils 1 her eingeschobene Nutensteine 15 werden zu der Verbindungsplatte 2 ausgerichtet und die Schrauben 16 in die Gewindebohrungen 19 der Nutensteine 15 eingedreht. Mit dem Anziehen der Schrauben 16 legen sich die Nutensteine 15 gegen die durch die Aufweitung 17 der Nut 5 gebildeten Hinterschneidungen an, und die Verbindungsplatte 2 wird gegen das Profil 1 gezogen.

Die aus dem Gewinde 19 des Profilsteins 15 austretende Schraube 16 kann nicht gegen den Nutenboden anstoßen und dadurch blockiert werden. Dies verhindert die Nut 11, deren Tiefe entsprechend den möglichen Toleranzabweichungen der Schraubenlänge bemessen ist. Die Breite der Nut übersteigt nicht wesentlich den Durchmesser der Schraube 16, so dass zur Bildung der Nut 11 nur eine geringe, die Gesamtstabilität des Profils entsprechend wenig beeinträchtigende Materialentnahme erforderlich ist.

Diese Materialentnahme wird in dem Ausführungsbeispiel ganz oder teilweise durch den Vorsprung 14 ausgeglichen.

Es versteht sich, dass die Profile 1 und 3 mit an allen Profilseiten vorgesehenen Nuten als universell verwendbare Konstruktionsteile für die Herstellung von Trägereinrichtungen für Maschinen und Halterungsvorrichtungen dienen können.

## Patentansprüche

1. Profil mit hinterschnittenen Nuten (5) für die Aufnahme in den Nuten (5) verklemmbarer Nutensteine (15), wobei im Nutenboden jeweils eine Vertiefung (11) gebildet und das Profil ein Hohlprofil ist, und wobei in den Profilhohlraum (4) Vorsprünge (14) ragen, welche in bezug auf die Festigkeit des Profils die Vertiefungen (11) in den Nutenböden ganz oder teilweise ausgleichende Materialverstärkungen bilden, und das Profil im Umriss eine quadratische Querschnittsfläche aufweist,
**dadurch gekennzeichnet,**
**dass**, im Querschnitt gesehen, auf jeder Quadratseite zwei Nuten (5) mit einer Vertiefung (11) im Nutenboden (10) gebildet sind, und dass die Querschnittsflächen der Nuten (5) symmetrisch zu den Diagonalen der quadratischen Profilquerschnittsfläche angeordnet sind und diese Diagonalen jeweils eine Mittelachse für die Vorsprünge (14) bilden.

2. Profil nach Anspruch 1,
**dadurch gekennzeichnet,**
**dass** es sich bei der Vertiefung jeweils um eine in längsrichtung der Nut (5) verlaufende Rille (11) handelt.

3. Profil nach Anspruch 2,
**dadurch gekennzeichnet,**
**dass** die Rille (11) eine etwa halbkreisförmige Querschnittsfläche aufweist.

## Claims

1. Profile with undercut grooves (5) for receiving groove blocks (15) which can be clamped in the grooves (5), wherein a depression (11) is in each case formed in the groove bottom and the profile is a hollow profile, and wherein projections (14) project into the profile cavity (4), which projections, with respect to the strength of the profile, form material reinforcements which completely or partially compensate for the depressions (11) in the groove bottoms, and the profile has a square cross-sectional area in outline, **characterized in that**, as viewed in cross section, two grooves (5) with a depression (11) in the groove bottom (10) are formed on each side of the square, and **in that** the cross-sectional areas of the grooves (5) are arranged symmetrically to the diagonals of the square profile cross-sectional area and these diagonals each form a centre axis for the projections (14).

2. Profile according to Claim 1, **characterized in that** the depression is in each case a channel (11) extending in the longitudinal direction of the groove (5).

3. Profile according to Claim 2, **characterized in that** the channel (11) has an approximately semicircular cross-sectional area.

## Revendications

1. Profilé avec des rainures en contre-dépouille (5) destinées à recevoir des languettes (15) pouvant être coincées dans les rainures (5), un creux (11) étant à chaque fois formé dans le fond de la rainure et le profilé étant un profilé creux et des proéminences (14) s'avançant dans l'espace creux (4) du profilé qui forment, par rapport à la solidité du profilé, des renforcements de matériau compensant totalement ou partiellement les creux (11) dans le fond de la rainure et le profilé présentant, sur le contour une surface transversale carrée,
**caractérisé**
**en ce que**, en vue transversale, sur chaque côté du carré, deux rainures (5) avec un creux (11) dans le fond (10) de la rainure sont formées et en ce que les surfaces transversales des rainures (5) sont disposées symétriquement par rapport aux diagonales de la surface transversale carrée du profilé et ces diagonales forment à chaque fois un axe central pour les proéminences (14).

2. Profilé selon la revendication 1, **caractérisé**
**en ce qu'**il s'agit, pour le creux, à chaque fois d'une gorge (11) s'étendant dans le sens longitudinal de la rainure (5).

3. Profilé selon la revendication 2, **caractérisé**
**en ce que** la gorge (11) présente une surface transversale environ en forme de demi-cercle.
